# EUROPEAN PATENT SPECIFICATION

(11) **EP 1 585 647 B1**
(45) Date of publication and mention of the grant of the patent: **18.10.2006**
(21) Application number: 03700074.2
(22) Date of filing: 20.01.2003
(51) Int. Cl.: B60P 3/10, B60K 6/04

(54) **MOBILE CARRIAGE FOR HANDLING BODIES ON LAND**
TRANSPORTWAGEN
CHARIOT MOBILE POUR LA MANUTENTION DE CORPS A TERRE

(43) Date of publication of application: 19.10.2005
(73) Proprietor: Mantovani, Sacha, 6932 Breganzona (CH)
(72) Inventor: Mantovani, Sacha, 6932 Breganzona (CH)
(74) Representative: Fiammenghi-Domenighetti, Delfina
(86) International application number: PCT/IB2003/000124
(87) International publication number: WO 2004/065166

(56) References cited:
- EP-A- 0 566 545
- EP-A- 0 864 485
- WO-A-01/68444
- DE-A- 3 914 927
- DE-A- 4 121 386
- FR-A- 2 800 334
- GB-A- 2 151 560
- NL-A- 8 005 665
- US-A- 3 280 931
- US-A- 4 044 854
- US-A- 5 362 083

## Description

The present invention relates to mobile carriages used for moving about, on land, large heavy bodies, such as boats in ports and dockyards, which are placed on these carriages.

These carriages consist of a loadbearing frame of quadrilateral shape, with two mutually perpendicular pairs of parallel sides or members on which suitable bearing surfaces are placed for the boats, with suitable fastening members for tying them down. This frame transfers its weight to the ground via multiple wheelsets, each comprising one or more wheels. These wheelsets, which can steer about a vertical axis, give a carriage the mobility and manoeuvrability it needs, and are driven by electric motors powered by batteries installed on the carriage itself.

A mobile carriage of the type described above is efficient in direct proportion to its manoeuvrability and its versatility of use with different types and sizes of bodies, but always has a limitation on the maximum duration of each of its periods of use because of down times due to the necessity of periodically recharging its batteries. To avoid the down times a carriage can be fitted with a transformer-rectifier unit to recharge the batteries from the mains, but this necessarily means using a power cable connecting the mains to the said transformer-rectifier unit, the existence of which creates numerous problems which limit the mobility and manoeuvrability of the carriage itself.

The inventor of the present innovation has devised a mobile carriage of the type described above, in which the levels of mobility, manoeuvrability and versatility of use are unusually high for the current state of the art.

Examples of the prior art are described in US 3 280 931A, US 5 362 083A which discloses the closest prior art and EP 0 864 485A, but is as it will be better explained, none of them presents the innovative features described in the present application, which give the possibility to obtain the maximum possible manoeuvrability for a carriage according to the invention.

First and foremost, one or more autonomous electricity generators, provided with a rectifier, are installed on the mobile carriage of the invention to continuously recharge the batteries, thus avoiding the down times mentioned earlier.

Each wheelset, furthermore, can be actuated completely independently of the others as regards both the power developed and the steering angle, and this characteristic makes it possible to carry out manoeuvres with extreme precision and versatility, as will be described later.

Moreover, between the pair of long sides forming the loadbearing frame of the carriage of the invention, members are inserted which, when appropriately actuated, can vary their length in a direction perpendicular to the said pair of sides, thus modifying the distance between these sides to adapt the said pair as required to the transverse width of the body which the carriage is to support. This operation is performed by rotating the wheelsets connected to at least one of the said sides until the axes of rotation of the wheels are parallel to that side: by actuating their electric motors in the appropriate direction it is possible to move this side towards or away from the other side which is - parallel thereto. (The above-described manoeuvre can also of course be carried out by actuating all the wheelsets on both parallel sides, steering them as appropriate.)

Lastly, mounted on the outside of the said parallel sides forming the long pair in the carriage of the invention, are means capable of connecting to other similar means mounted on the outside of the corresponding sides of another carriage when the two carriages are placed alongside each other in lateral contact: this makes it possible to connect together multiple carriages, even of different sizes, in order to match the total area of support presented by the carriages to the type and dimensions of the body to be transported. All actuation commands to each wheelset are sent by a central logic unit equipped with microprocessor(s) in order to coordinate the commands in the desired manner.

The subject of the present invention is therefore a mobile carriage for handling bodies on land as described in the appended Claim 1.

A more detailed description will now be given of a preferred illustrative embodiment of the mobile carriage of the invention, also showing certain types of manoeuvre which can be performed with it. In the course of this description reference will also be made to the appended drawings, which show:
- in Figure 1, a schematic plan view of a mobile carriage according to the invention, before and after carrying out a steering manoeuvre towards the right;
- in Figure 2, a schematic plan view of the carriage of Figure 1, before and after carrying out a rotation about its geometrical centre;
- in Figure 3, a schematic plan view of two carriages according to the invention placed parallel and alongside each other in the course of a manoeuvre designed to allow them to be fixed side by side to each other.

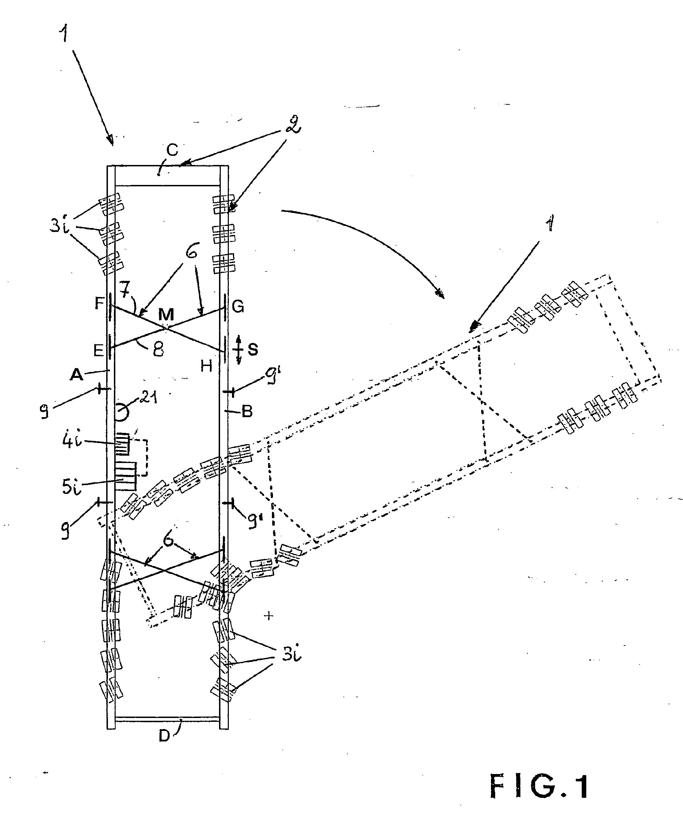

Referring to Figure 1, this shows a mobile carriage 1 according to the invention (in the treatment which follows, this will be abbreviated to "carriage"), comprising a loadbearing frame 2 formed by pairs of parallel sides A, B and C, D placed at right angles to each other, of which the pair with sides A, B is longer, and during manoeuvres is parallel with the longitudinal axis of for example a boat to be transported.

The long sides A, B transfer their weight to the ground via multiple wheelsets 3i, each of which in the present case has two wheels side by side: each wheelset 3i can be steered independently of the others by rotating about a vertical axis, and is actuated, also independently, by its own electric motor which is mounted on it by one of the known methods and powered by a series of batteries 4i installed on the frame 2, preferably underneath it.

In the carriage 1 of the invention, and again preferably underneath it, one or more independent electricity generators 5i are installed: these, by means of suitable rectifiers, continuously recharge the batteries when their charge falls below a predetermined level. The inventor envisages the use of generators of modular type, with for example a power of 10 kW each, equipping each carriage 1 with a variable number of generators depending on the size of the carriage and the power consumed by all the wheelsets together (the number of wheelsets is itself variable according to the dimensions and loading capacity of each carriage).

Interposed between the two long sides A, B are one or more articulated systems 6 capable of varying their length in a direction perpendicular to the two sides A, B, to which latter their ends E, F, G, H are attached.

In the present case these systems are two in number and each consist of a four-bar chain 6 formed by two bars 7, 8 connected together at their mid-point M by a revolute-type joint, that is in order to be able to rotate relative to each other about this point M.

The ends E, F, G, H of these bars 7, 8 are attached to the sides A, B via sliding blocks, as shown schematically in the drawing, in order to be able to slide as indicated by the arrows S when the two bars 7, 8 rotate about the point M, thus modifying the distance between these sides A, B.

Clearly, in order for this operation to be possible it is also necessary that the length of the other two, short sides C, D be able to vary to adapt to the distance between the sides A, B imposed by the transverse extension of the systems 6. To this end these sides C, D may be constructed with telescopic systems of known type (not shown).

The solution described above has been provided for illustrative clarity, but the inventor also envisages producing a different solution, not shown in the drawings, in which the said two short sides C, D are not present, and are functionally substituted by two of the above-described systems 6, installed in the vicinity of the ends of the pair formed by the long sides A, B in such a way that they can also be removed from them.

This solution gives more space between the two sides A, B, for example for the keel of a boat to be inserted or for housing a large body which is then lifted from the ground, once the sides A, B are placed against the sides of the body and the body is then loaded on these sides.

Altering the length of the systems 6 in a direction perpendicular to the sides A, B can be carried out with ease by steering the wheelsets connected to at least one of the sides in such a way that the axes of rotation of the wheels are made parallel to these sides A, B and actuating their electric motors in the desired direction in order to reduce or increase the space between them.

Once the attitude and dimensions of the carriage 1 are as desired, reversible locking means (not shown) of known type must of course be inserted to prevent further rotations of the bars 7, 8 of the systems 6 and/or further movements between the telescopic parts of the short sides C, D, where these exist.

Owing to the extreme versatility of the carriage 1 of the invention and to the independent control of each wheelset 3i it is possible, by using a central logic unit 21, with processors, installed on the carriage 1 itself, to enter in advance, before each manoeuvre, the steering angle and the power and/or speed of actuation of each wheelset 3i. Figure 1 shows how all the wheelsets 3i should be steered to perform a steering manoeuvre towards the right (the position of the carriage 1 after the operation is indicated in broken lines).

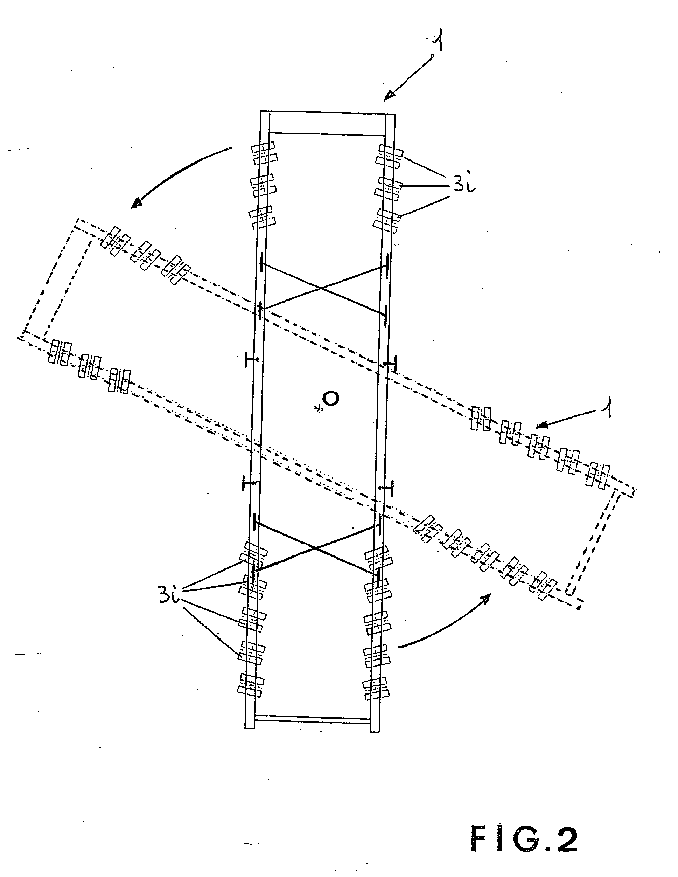

Figure 2 meanwhile shows how the wheelsets 3i should be steered to rotate the carriage 1 about its geometrical centre O.

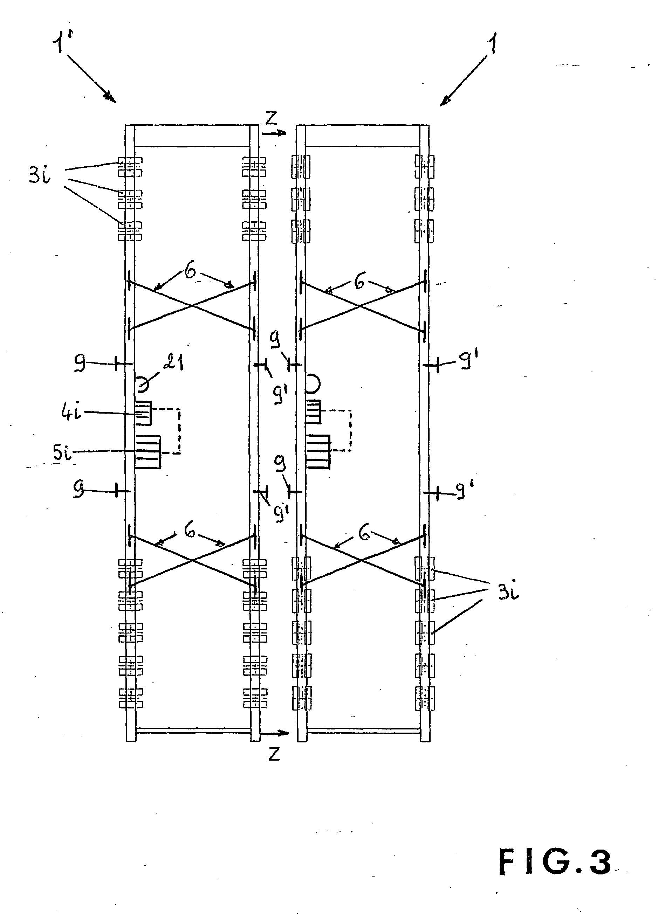

Lastly, Figure 3 shows how to bring together the two pairs of long sides A, B of two identical carriages 1, 1', after having determined their transverse dimensions as described earlier.

While the carriage 1 is kept stationary, all the wheelsets 3i of another carriage 1' of similar type are steered until the axes of rotation of the wheels are parallel to its long sides A, B, as shown in Figure 3. The wheelsets 3i of the carriage 1' are then activated to move it (arrows Z) towards the side of the other, still stationary carriage 1, bringing together the means 9, 9' mounted on the outsides of the sides A, B of both carriages 1, 1', which can then be connected together. These means 9, 9' are shown schematically in the figures as T-shaped elements which connect together by bolts or other members of known type (not shown).

## Claims

1. Mobile carriage (1) for handling bodies on land, comprising a quadrilateral loadbearing frame (2) formed by a pair of long parallel sides (A, B) and a pair of short members (C, D) connecting their ends at right angles, there being mounted beneath at least each of the long sides (A, B) multiple wheelsets (3i) each made up of one or more wheels and driven by electric motors powered by batteries (4i) installed on the mobile carriage (1) itself, wherein one or more autonomous electricity generators (5i) are also installed on the carriage and continuously recharge the said batteries (4i), and wherein each individual wheelset (3i) of the carriage (1) can steer by rotating about a vertical axis, being actuated both as regards the power developed, the speed and the steering angle independently of the other wheelsets (3i).

2. Mobile carriage according to Claim 1, in which the short members (C, D) are provided with means capable of varying their length, and, interposed between the two long sides sides (A, B), there are one or more systems (6), with their ends (E, F, G, H) fixed to these sides (A, B), capable of varying their length in a direction perpendicular to these sides (A, B), thereby varying the distance between the latter.

3. Mobile carriage according to Claim 2, in which the said systems (6) capable of varying their length in a direction perpendicular to the long sides (A, B) are positioned in the vicinity of the ends of the latter, and replace the said members (C, D), which are no longer present.

4. Mobile carriage according to either of Claims 2 and 3, in which the said systems that can vary their length in a direction perpendicular to the long sides (A, B) are in the form of one or more four-bar chains (6) formed by two bars (7, 8) connected together at their mid-point (M) by a revolute joint with their ends (E, F, G, H) attached slidingly to the abovementioned sides (A, B).

5. Mobile carriage according to one of the preceding claims, in which there are mounted, on the outside of its said long sides (A, B), means (9, 9') capable of connecting to other identical means (9, 9') mounted on the long sides (A, B) of another mobile carriage (1') placed alongside it.

## Patentansprüche

1. Beweglicher Wagen (1) zum Transportieren von Körpern auf dem Landweg, der Folgendes umfasst: einen vierseitigen lasttragenden Rahmen (2), der durch ein Paar paralleler Langseiten (A, B) und ein Paar kurzer Elemente (C, D) ausgebildet ist, die an ihren Enden rechtwinklig verbunden sind, wobei unter mindestens jeder Langseite (A, B) mehrere Rädersätze (3i) angebracht sind, die jeweils aus einem oder aus mehreren Rädern gebildet sind und durch Elektromotoren angetrieben werden, die von Batterien (4i) gespeist werden, die an dem beweglichen Wagen (1) selbst angebracht sind, wobei ein oder mehr eigenständige Elektrogeneratoren (5i) ebenfalls an dem Wagen angebracht sind und die Batterien (4i) fortlaufend wieder aufladen, und wobei jeder einzelne Rädersatz (3i) des Wagens (1) durch Drehen um eine vertikale Achse steuerbar ist, die im Hinblick auf die entwickelte Kraft, die Geschwindigkeit und den Steuerwinkel von den anderen Rädersätzen (3i) unabhängig betätigt wird.

2. Beweglicher Wagen nach Anspruch 1, in dem die kurzen Elemente (C, D) mit Mitteln bereitgestellt sind, die ihre Länge verändern können, und zwischen die beiden Langseitenseiten (A, B) gesetzt, ein oder mehr Systeme (6) eingesetzt sind, deren Enden (E, F, G, H) an diesen Seiten (A, B) befestigt sind, die ihre Länge senkrecht zu diesen Seiten (A, B) verändern können, wodurch sie den Abstand zwischen letzteren verändern.

3. Beweglicher Wagen nach Anspruch 2, in dem die Systeme (6), die ihre Länge senkrecht zu den Langseiten (A, B) verändern können, in der Nähe der Enden der letzteren angeordnet sind und die Elemente (C, D) ersetzen, die nicht mehr vorhanden sind.

4. Beweglicher Wagen nach einem der Ansprüche 2 und 3, bei dem die Systeme, die ihre Länge senkrecht zu den Langseiten (A, B) verändern können, die Form einer oder mehrerer Vierstabketten (6) aufweisen, die von zwei Stäben (7, 8) ausgebildet werden, die an ihrem Mittelpunkt (M) durch ein Scharniergelenk verbunden sind, wobei ihre Enden (E, F, G, H) verschiebbar an den Seiten (A, B) befestigt sind.

5. Beweglicher Wagen nach einem der vorhergehenden Ansprüche, bei dem an der Außenseite seiner Langseiten (A, B) Mittel (9, 9') angebracht sind, die mit anderen identischen Mitteln (9, 9') verbunden werden können, die an den Langseiten (A, B) eines anderen beweglichen Wagens (1') befestigt sind, der an seiner Langseite angeordnet ist.

## Revendications

1. Chariot mobile (1) pour manutentionner des corps à terre, comprenant un châssis de support de charge en forme de quadrilatère (2) formé par deux côtés longs parallèles (A, B) et deux éléments courts (C, D) reliés à angle droit au niveau de leurs extrémités, de multiples trains de roues (3i) étant montés au moins sous chacun des côtés longs (A, B), multiples trains de roues qui sont formés chacun d'une ou de plusieurs roues et qui sont entraînés par des moteurs électriques alimentés par des batteries (4i) installées sur le chariot mobile (1) proprement dit, dans lequel un ou plusieurs générateurs d'électricité autonomes (5i) sont également installés sur le chariot et rechargent lesdites batteries (4i) en continu, et dans lequel chaque train de roues (3i) individuel du chariot (1) peut s'orienter en pivotant sur un axe vertical, en étant actionné tant en ce qui concerne la puissance développée que la vitesse et l'angle d'orientation de manière indépendante des autres trains de roues (3i).

2. Chariot mobile selon la revendication 1, dans lequel les éléments courts (C, D) sont équipés de moyens dont la longueur est variable, tandis qu'il est prévu, interposés entre les deux côtés longs (A, B) un ou plusieurs systèmes (6) dont les extrémités (E, F, G, H) sont fixées à ces côtés (A, B) et dont la longueur est variable dans une direction perpendiculaire auxdits côtés (A, B) pour ainsi faire varier la distance entre ces derniers.

3. Chariot mobile selon la revendication 2, dans lequel lesdits systèmes (6) dont la longueur est variable dans une direction perpendiculaire aux côtés longs (A, B) sont positionnés au voisinage des extrémités de ces derniers, et remplacent lesdits éléments (C, D) qui ne sont plus présents.

4. Chariot mobile selon les revendications 2 et 3, dans lequel lesdits systèmes dont la longueur peut varier dans une direction perpendiculaire aux côtés longs (A, B) se présentent sous la forme d'une ou de plusieurs chaînes cinématiques à quatre joints articulés (6) formées par deux barres (7, 8) reliées l'une à l'autre au niveau de leur point médian (M) par une articulation cylindrique et dont les extrémités (E, F, G, H) sont reliées de manière coulissante aux côtés (A, B) susmentionnés.

5. Chariot mobile selon l'une quelconque des revendications précédentes, comportant, montés à l'extérieur des ses côtés longs (A, B), des moyens (9, 9') aptes à être reliés à d'autres moyens (9, 9') identiques montés sur les côtés longs (A, B) d'un autre chariot mobile (1') placé à côté de lui.
